(19) Europäisches Patentamt
European Patent Office
Office européen des brevets

(11) **EP 4 425 289 B1**

(12) **EUROPEAN PATENT SPECIFICATION**

(45) Date of publication and mention
of the grant of the patent:
**08.07.2026 Bulletin 2026/28**

(21) Application number: **23159873.1**

(22) Date of filing: **03.03.2023**

(51) International Patent Classification (IPC):
**G05B 23/02** (2006.01)

(52) Cooperative Patent Classification (CPC):
**G05B 23/0283**

(54) **ELECTRONIC DEVICE WITH LIFETIME MONITORING IN REAL-TIME**

ELEKTRONISCHE VORRICHTUNG MIT LEBENSDAUERÜBERWACHUNG IN ECHTZEIT

DISPOSITIF ÉLECTRONIQUE AVEC SURVEILLANCE DE DURÉE DE VIE EN TEMPS RÉEL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.09.2024 Bulletin 2024/36**

(73) Proprietor: **Tridonic GmbH & Co. KG**
**6851 Dornbirn (AT)**

(72) Inventor: **Hanlon, Neil**
**6850 Dornbirn (AT)**

(74) Representative: **Beder, Jens**
**Mitscherlich PartmbB**
**Karlstraße 7**
**80333 München (DE)**

(56) References cited:
**US-A1- 2003 204 777    US-A1- 2022 185 041**

• **LENZ JOAO M ET AL: "DC-link electrolyte capacitor lifetime analysis for a PV boost converter", 2017 IEEE 8TH INTERNATIONAL SYMPOSIUM ON POWER ELECTRONICS FOR DISTRIBUTED GENERATION SYSTEMS (PEDG), IEEE, 17 April 2017 (2017-04-17), pages 1 - 6, XP033116216, [retrieved on 20170707], DOI: 10.1109/PEDG.2017.7972544**
• **SHUNFENG CHENG ET AL: "Multivariate State Estimation Technique for Remaining Useful Life Prediction of Electronic Products", 31 December 2007 (2007-12-31), XP055393616, Retrieved from the Internet <URL:http://citeseerx.ist.psu.edu/viewdoc/download?doi=10.1.1.88.8332&rep=rep1&type=pdf> [retrieved on 20170725]**

**Description**

The invention relates to the field of electronic systems and determining expected lifetime of electronic systems. In particular, an electronic control circuit, an electronic device and a method for monitoring an expected lifetime of the electronic device in real-time are presented.

Determining the expected service life is part of a design process for products that include electronic systems and generally uses tools and calculations from a reliability analysis. An expected service life differs from a predicted lifetime of the electronic system, in terms of parameters such as a mean time before failure (MTBF) or a maintenance-free operating period (MFOP). It is established practice that a manufacturer of electronic systems estimates a predicted lifetime for his products using hypothetical modelling and calculations based on the hypothetical modelling. Parameters such as MTBF or MFOP enable to measure a performance of the electronic system as a time-period during which the electronic system is expected to perform its intended functions requiring only a minimal degree of maintenance in case of the parameter MFOP. In case of the parameter MTBF, a predicted elapsed time between inherent failure of a mechanical or electronic system during system operation according specifications (normal system operation) may be calculated, e.g., as the arithmetic mean average time between predefined failures of electronic system. The predicted lifetime of the electronic system influences operational cost of the electronic system for the customer due to need to repair or replace defective equipment. Knowledge on the predicted lifetime of the electronic system enables planning and scheduling of preventive maintenance measures.

US 2022/185041 A1 discloses a method of determining a status of a tire monitoring device that includes a power supply. The method includes determining a value indicative of consumption of the power supply, determining a status of the tire monitoring device based on the value indicative of consumption of the power supply, and providing an indication based on the determined status.

US 2003/0204777 A1 shows an electronics-based system for power conversion and load management provides control sequencing and prognostic health monitoring and diagnostics for fault tolerant operation of the system. The system includes a prognostic health monitoring and diagnostic unit for identifying present out-of-range conditions, overload conditions, and trending violations, for components of the system and a decision making unit, which controls transitions between a plurality of operating modes to ensure fail-safe operation without unnecessary tripping, cold-starts or system resets upon the occurrence of certain fault conditions.

Lenz, Joao et al, "DC link electrolytic capacitor lifetime analysis for a PV boost converter", 2017 IEEE international symposium on power electronics for distributed generation systems, IEEE, 17 April 2017, pages 1 to 6, XP033116216 discloses use of electrodynamic modeling for obtaining a the capacitor operating condition for various levels of power processing based on a real photovoltaic mission profile built for a 10 years period of weather data. Based thereon, the lifetime of different designs of electrolytic capacitor banks were analyzed.

Shunfeng Cheng et al, "Multivariate state estimation technique for remaining useful life prediction of electrolytic products", 31 December 2007, XP055393616 presents a prognostics approach combining the multivariate state estimation technique with life cycle damage prediction for predicting the remaining useful life of electronic products.

Currently, the design engineer for electronic systems, which include electronic devices using printed circuit boards (PCB), on which a plurality of electronic circuit components are situated, calculates in a design phase the predicted lifetime of the product. The design engineer uses predetermined measurement points for critical circuit components such as electrolytic capacitors together with estimated running conditions during operation of the electronic device. Characteristically, the estimated running conditions include assumptions on electric currents and on temperatures to which the critical circuit components of the electronic device are exposed to during the operational life of the electronic device. Assumptions on estimated running conditions may differ from actual conditions the electronic device experiences in the field at the site of the user of the electronic device.

Regarding the example of emergency driver representing an example for electronic device, assumptions on base data including device temperatures and ripple current alongside running conditions in the specific application in the field may vary widely depending on the specific modes of operation and based on the actual times the emergency driver operates each of the specific modes of operation. The modes of operation of the emergency driver may include a charging mode for charging an energy storage device from mains supply. A further mode of operation is a discharging mode, during which a predetermined charging level is of the energy storage device is maintained, or a load device such as an emergency light module is driven with a predetermined load current based on energy drawn from the energy storage device.

Thus, a more accurate representation of a predicted lifetime of the electronic device would be advantageous.

Therefore, it is an object of the invention to provide an electronic device with the capability of determining a more accurate estimate of lifetime, preferably even for display to a customer and a user.

An electronic device according to independent claim 1, a method and a computer program according to the corresponding independent claims provide an advantageous solution to the mentioned problems.

The first aspect concerns an electronic device comprising electronic circuitry that includes at least one electronic control circuit, wherein the electronic control circuit is configured to obtain information on which operational mode of at least two operational modes the electronic device is currently operating in. At least one parameter value of a parameter of the electronic device differs in a first operational mode from a parameter value of the parameter during operation in at least one second mode of the at least two operational modes. The electronic control circuit generates time information on a duration of the electronic device operating in each of the at least two operational modes, and to store the generated time information in a memory. The electronic control circuit is further configured to calculate a predicted lifetime information of the electronic device based on the time information stored in the memory, and further based on stored data on the at least two operational modes. The electronic control circuit is configured to output the calculated predicted lifetime information to at least one of a data interface of the electronic device or a display of the electronic device. The at least one parameter of the electronic device includes a measured device temperature, a measured temperature of the electronic control circuit and an ambient temperature of the electronic device. The electronic control circuit is configured to estimate the ambient temperature of the electronic device based on a predetermined relationship between a measured internal temperature of the electronic control circuit and the measured device temperature of the electronic device.

The electronic device overcomes the issue that currently the measurements forming the basis from which an expected lifetime for the electronic device may be estimated, only form part of a design phase for the respective electronic device, and enable deriving an estimate for a general expected lifetime for a particular type of electronic device. The estimate for the expected lifetime may then be indicated for example in a technical data sheet for the electronic device, but will invariably only provide a rough estimate, which might differ from an actual lifetime value for a specific instance of the electronic device, that undergoes operational conditions that widely differ from the actual measurement conditions that base on generic allegations made in the design phase.

The electronic device according to the first aspect, however, lays the groundwork for a real-time monitoring of the predicted lifetime in each electronic device individually, which is based on information that is available inside the electronic device during its regular operation under the environmental conditions and operational conditions that the respective electronic device and its application in the field. The alleged conditions in the design phase may therefore provide a starting point for a continous update of the predicted lifetime, in particular for a predicted remaining lifetime of each electronic device during operation in the field. This enables a a targeted predictive maintnance of an electronic device reaching an end of its predicted lifetime, or making having a replacemnt device ready, or to plan an early replacement for the electronic device in order to increase availability of an infrastructure system in a highly targeted manner, which is particularly advantageous for critical infrastructure such emrgency lighting, excape route guidance, or fire alarm systems in order to name just a few examples.

The term predicted lifetime information can include at least one of a predicted lifetime of the electronic device, an expected lifetime for the electronic device, a remaining predicted lifetime of the electronic device, a predicted lifetime measure representing the expected lifetime for the electronic device, or a predicted lifetime representative value for the predicted lifetime for the electronic device.

Outputting the output the calculated predicted lifetime information to at least one of a data interface may encompass outputting the predicted lifetime information for transmission via a communication link, a communication network, e.g., a DALI™ interface, a proprietary interface to an external device. The external device may include implementations using a mobile computer, a stationary server 13, a mobile wireless communication device, a tablet or notebook computer, a diagnosis tool, or a commissioning device, as examples An internal or external display of the electronic device may include any display means enabling to display the information perceivable fora human observer, either externally visible on a housing assembly of the electronic device or visible when opening a housing of the electronic device, e.g. on a printed circuit board of the electronic device.

The display may include a display arranged detached from the electronic device and linked via the interface to the electronic device. This may comprise a detached display arranged within a luminaire or externally perceivable on a housing assembly of the luminaire that includes the electronic device.

Thus, the electronic control circuit, which may control the operation of the electronic device and arranged inside the device housing monitors the switching times and thereby a change between the different operation modes of the electronic device. Thus, based on information provided by the electronic control circuit, it is possible to determine a duration during which the electronic device operated in which operational mode, e.g. a mode including a charging processof a energy storage device or a mode during which the electronic device bases operations on energy from a discharging process of the energy storage device. Since it is possible to conclude from the respective operational mode to temperatures that occurred in the electronic device, it is possible to estimate an effect on the predicted lifetime taking into consideration the history of occurred temperatures during operation of the electronic device up to the current time. Thus, implementing an algorithm running in the elctronic control circuit inside the electronic device, which continuously monitors the switching between the different operational modes, allows to give an estimate for the predicted lifetime in real-time and based on the actual operational history of the electronic device. In order to be able to base the calculation on the entire history, the time intervals during which the device operated in the respective operation mode are recorded. This allows to evaluate an accumulated temperature stress from installation of the electronic device up to now.

The generated information on the predicted lifetime can then be used in order to control maintenance measures specifically towards the end of the lifetime, for example, or simply informing an operator of the system about the predicted remaining lifetime individually for each electronic device. Therefore, the electronic device does not simply rely on type-specific general technical data, which use statistic data generated in the design phase for the expected lifetime, but provides up-to-date information, which in fact bases on the operation history of the individual electronic device.

The dependent claims define further advantageous embodiments of the invention.

According to one embodiment of the electronic device, the at least one parameter of the electronic device includes further at least one electric current in the electronic device.

Electronic components include in most electronic circuits are, e.g., electrolytic capacitors, which are sensitive to aging effects due to experienced temperatures during their operative component life. Thus, real time monitoring of device lifetime, which is based on information that is available inside the electronic device during regular operation is able to take into account essential differences between temperatures of electrolytic capacitors that depend on the ratio of operating times in different operation modes of the electronic device, e.g. whether the electronic device operates with a charger circuit charging an energy storage device or drawing energy from the energy storage device. Thus, having knowledge about the modes and the duration of the operation in the respective mode proves advantageous for concluding cumulatively which temperatures occured in the electrolytic capacitors, which more often than not cause a device failure.

The ambient temperature refers to the ambient temperature to which the electronic device is exposed to during operation at its current location in the environment. The ambient temperature may vary during its operational life, and therefore significantly contributes to the different environmental conditions during operation at the user's premises, which the design process can currently only summarily allege for estimating the lifetime during a design process of the electronic device.

The electric current may be a load current provided by the electronic device to a load such as a lighting module, an escape route lighting, an dynamic escape route marking, a loudspeaker assembly. The parameter electric current may in particular denote an electric current for an electrolytic capacitor of electronic circuitry included in the electronic device, in particular a ripple current through the electrolytic capacitor or plural ripple currents through the electrolytic capacitors arranged on a circuit board.

Estimating the ambient temperature may include approximating the ambient temperature around the electronic device, in particular immediately at the surface of a housing assembly, of the electronic device is based on a predetermined relationship. The predetermined relationship may have been determined during the design process based on measurements and stored, e.g., in the memory, in a correspondence table, or lookup table, in the electronic device.

The electronic device according to an embodiment may be configured to calculate the predicted lifetime information online, in particular at regular intervals, during operation of the electronic device. Calculating online may be understood to encompass calculating in real-time and continuously during operation of the electronic device, at predetermined time intervals, at regular time intervals. The time intervals may be shorter, in particular significantly shorter, e.g., shorter by an order of magnitude, than characteristic time durations for which the electronic device is operating in one of the operational modes, e.g., the operational mode with the shortest duration of the specific characteristic time durations of all the operational modes.

The electronic control circuit itself that controls switching from one operational mode to another operational mode, may monitor the times of switching between the different operational modes. The control circuit may calculate from the determined times of switching time information of the electronic device operating in the respective operational modes and use mode information for calculating the predicted lifetime. This might be done continuously so that only the actual value for the expected remaining lifetime needs storing in the electronic device. Alternatively, calculation of the predicted lifetime may base on stored time information on switching between the operational modes as mentioned above. The information produced inside the microcontroller may then be available via an interface so that an operator of a system can access the estimated values for the predicted lifetimes at any time. Alternatively, in case that a plurality of electronic devices is under control by a a common management system, it might be possible to automatically transmit the calculated information on the predicted liftime to a central management device (server 13).

The electronic control circuit of one particular embodiment of the electronic device may be configured to calculate and store a computed remaining predicted lifetime as the predicted lifetime information.

The term predicted lifetime information may encompass a predicted lifetime of the electronic device, a predicted remaining lifetime of the electronic device, an expected lifetime of the electronic device. The predicted lifetime information is calculated based on the operational history of the electronic device as stored in log-file in the memory, and thus also based on the load the electronic device was exposed to during its operational life extending from manufacture of the electronic device, testing of the electronic device before delivery, installation at the premises of one or even successive plural users, commissioning of the electronic device, reinstallation, etc..

The electronic control circuit of the electronic device according one particular embodiment may include at least one of an integrated circuit, an application specific integrated circuit ASIC, a field programmable gate array FPGA, and a microcontroller.

The electronic control circuit may be implemented using any of the cited devices, preferably as an integrated circuit including at least one semiconductor device, which form part of and control operation of most current electronic devices. The electronic control circuit may include internal memory or be configured to store data on and to read data from memory means arranged externally to the electronic control circuit, e.g. on a printed circuit board of the electronic device.

According to an embodiment of the electronic device, the electronic control circuit is further configured to control switching of the electronic device between operating in the first operational mode and the at least one second operational mode of the electronic device.

Thus, the electronic control circuit has information on the load that the electronic device had to drive during its operational life up to the current point in time available. The electronic control circuit may, e.g., in combination with an internal counter or timer functionality of the electronic control circuit or provided externally to the electronic control circuit, determine and store the time durations the electronic device operated in each of the operational modes.

According to a further embodiment of the electronic device, the at least two operational modes include at least one first mode during which a charging circuit charges an electric storage device or maintains the electric storage device at a predetermined charge level, and at least one second mode during which the electronic device operates from electric energy drawn from the electric storage device.

The first modes may differ with regard to at least one of a charging current, a charging current profile, a battery chemistry of the energy storage device connected to or included in the electronic device. The energy storage device may for example include a (secondary) battery.

The charge level of the energy storage device can denote a charging status, e.g. a charging status defined as a proportion (fraction) of a total energy storage capacity of the energy storage device.

The second modes may differ with regard to a rated discharging current, which the electronic circuitry of the electronic device my draw from the energy storage device, in order to provide a predetermined load current for a predetermined minimum amount of time to a device supplied by the electronic device.

The electronic device according to an embodiment includes at least one converter circuit, and in particular, the electronic device may be an emergency converter device.

The electronic device may be light driver, in particular an emergency light driver that regularly employ DC/DC-converter circuits. The electronic device may include the converter circuit in a switched mode power supply (SMPS) circuit topology that typically includes at least one electronic control circuit in form of a microcontroller for controlling switching components, e.g. basing on field effect transistors (FET). The emergency driver represents a costly component of safety related building infrastructure, for which the enhanced predictive maintenance capability provided by the electronic device may be advantageous. The real-time monitoring capability provided by the electronic device according to any of the embodiments of the first aspect may be easily implemented with only limited cost for design in an emergency driver, and almost no further hardware cost for the individual electronic device arise when compared with a currently available emergency driver.

The memory may be an internal part of the electronic device of a particular embodiment. Thus, the electronic device stores in the memory that may be an integrated part of the electronic control circuit the information on the predicted remaining lifetime. In case the electronic device is repositioned as a part of a larger system, the electronic device has information on the past exposure to stress locally available, e.g. in a locally available log-file stored in the memory. Management of stress exposure is therefore simplified.

The method according to the second aspect of the invention achieves corresponding advantages as the device according to the first aspect. The method performs computing a predicted lifetime information of an electronic device. The electronic device comprises electronic circuitry including at least one electronic control circuit. The method includes steps of obtaining, by the electronic control circuit, information on which operational mode of at least two operational modes the electronic device is currently operating in, wherein at least one parameter value of a parameter of the electronic device differs in a first operational mode from a parameter value of the parameter during operation in at least one second mode of the at least two operational modes. The method further includes generating, by the electronic control circuit, time information on a duration of the electronic device operating in each of the at least two operational modes. The electronic control circuit stores the generated time information in a memory. The method then proceeds with the electronic control circuit calculating the predicted lifetime information of the electronic device based on the time information stored in the memory and further based on stored data on the at least two operational modes. The method then proceeds with outputting the calculated predicted lifetime information to at least one of a data interface of the electronic device or a display of the electronic device. The at least one parameter of the electronic device includes a measured device temperature, a measured temperature of the electronic control circuit and an ambient temperature of the electronic device. The method includes a step of estimating, by the electronic control circuit the ambient temperature of the electronic device based on a predetermined relationship between a measured internal temperature of the electronic control circuit and the measured device temperature of the electronic device.

The inventive approach may be easily implemented based on software running on available and already embedded hardware, e.g., a microcontroller in the electronic device.

A computer program according to the third aspect comprises instructions, which, when a computer or digital signal processor executes the program, cause the computer or digital signal processor to carry out the method according to the second aspect for computing a predicted lifetime information of an electronic device.

The description of embodiments refers to the enclosed figures, in which:

Fig. 1 is a simplified flowchart of a method for calculating a predicted lifetime of an electronic device according to an embodiment;

Fig. 2 provides a schematic circuit diagram of an emergency converter as an example for an electronic device according to an embodiment;

Fig. 3 is a simplified flowchart of a current method for calculating a predicted lifetime of the electronic device according to prior art;

Fig. 4 is a simplified flowchart illustrating a method for calculating a predicted lifetime of the electronic device;

Fig. 5 shows tables illustrating the process of lifetime calculation for the electronic device;

Fig. 6 shows a table illustrating the process of lifetime calculation for the electronic device **in** the design phase; and

Fig. 7 Fig. 7 shows a table illustrating examples for the expected lifetime for examples of emergency drivers for different ambient temperatures.

In the figures, corresponding elements have the same reference signs. The proportions and dimensions of the elements shown in the figures do not represent an electronic device or an emergency light driver to scale, but are merely chosen to describe the structure and function of the electronic device.

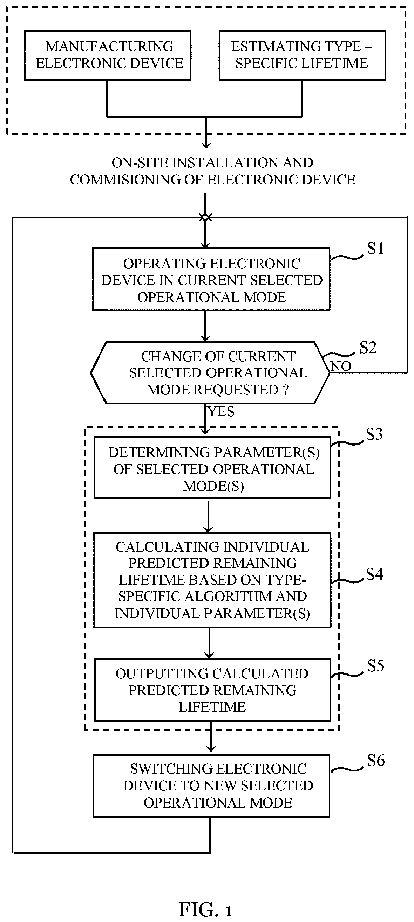

Fig. 1 is a simplified flowchart of a method for calculating a predicted lifetime of an electronic device according to an embodiment.

The method for predicting the remaining a lifetime of the electronic device concerns an electronic device, which a user applies in the field, e.g. which is operational service after early phases of product lifetime including, e.g., a product design phase, a manufacturing process including product test, and installation and commissioning phase.

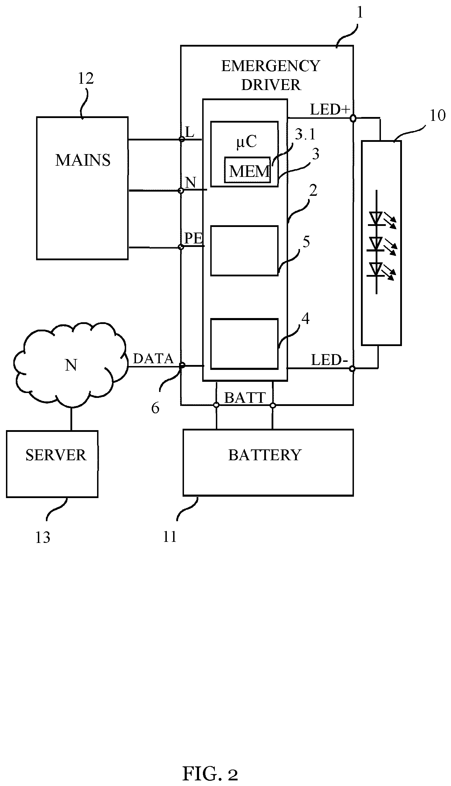

Some additional details concerning a structure and functional elements of the electronic device will be discussed with reference to fig. 2. The electronic device may be a building infrastructure device, e.g. a driver device including a light driver device, a LED converter device or an emergency driver device (emergency driver 1). The electronic device operates in one of at least two different operational modes, which differ by at least one measurable parameter of the electronic device.

The particular example of the emergency driver 1 is configured to operate in a first operational mode. In the first operational mode, the emergency driver 1 operates from mains power supply, typically the mains power supply of a building infrastructure providing AC power to the emergency driver 1.

In the first operational mode, a charger circuit 4 of the emergency driver 1, e.g. including a DC/DC converter circuit may generate DC power to an energy storage device 11, e.g. a rechargeable battery. Thus, in the first operational mode, a charging circuit of the emergency driver 1 may be in an ON-state, e.g. generating and outputting a charge current to the energy storage device 1.

Alternatively, in the first operational mode, the charger circuit 4 of the emergency driver 1, may show the charger, in particular the charging circuit of the emergency driver 1 may be in an OFF-state, e.g. in case the energy storage device 11 is in a fully or at least sufficiently charged state.

In a second mode of the different operational modes, the emergency driver 1 operates from the electric energy stored in the energy storage device 11, e.g. generating a load current $I_{LED}$ from electric energy drawn from the energy storage device 11 and providing the load current $I_{LED}$ to an electric load.

Specific examples of the electric load include emergency lighting modules 10 or emergency escape route signs.

The product design process of electronic devices includes estimating a type-specific estimated lifetime based on the specific design of the electronic device, e.g. its mechanical layout, its circuit board design, and its electric components, based on estimated environmental conditions, e.g. an ambient temperature or an alleged ambient temperature distribution over an envisaged lifetime of the electronic device, and based on alleged durations of the electronic device operating in each of the operational modes.

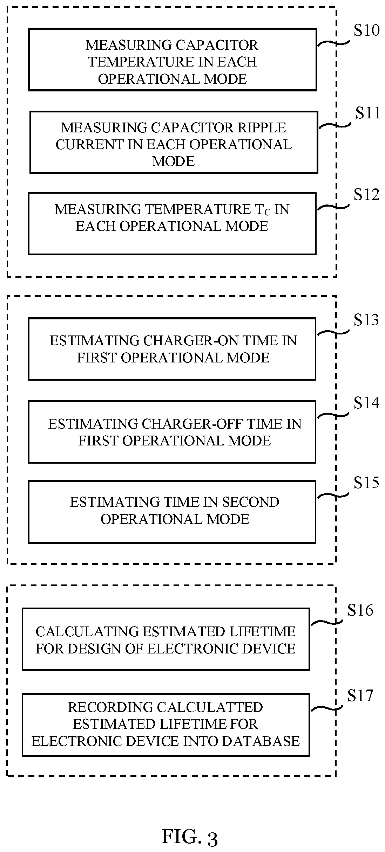

An example for estimating the operational lifetime of the electronic device as a type-specific, generalized estimated operational lifetime is discussed with reference to fig. 3.

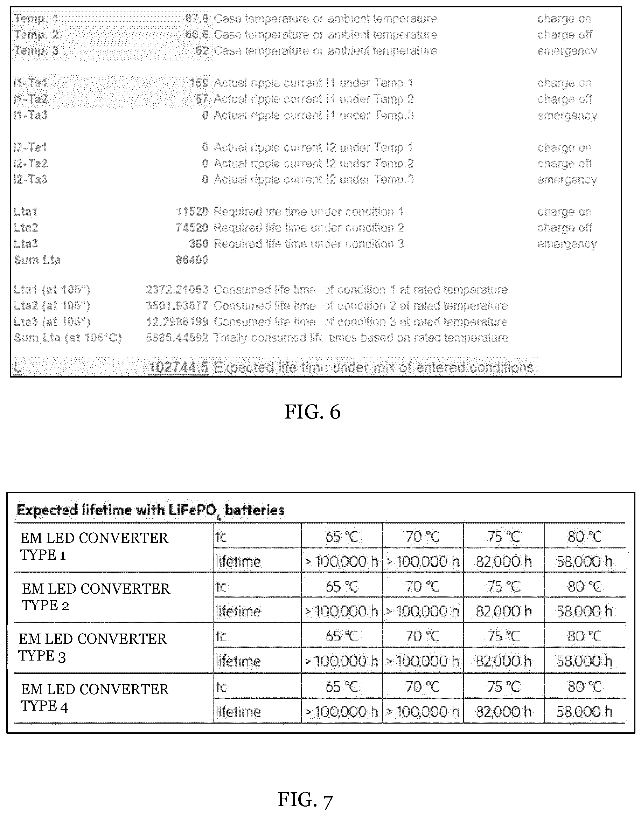

A data sheet for the electronic device may give specific instances of the estimated operational lifetime under specified environmental conditions, e.g. providing an application engineer with a guidance to an expected lifetime when employing the electronic device in a particular application scenario. Fig. 6 may be interpreted as an example for such estimated operational lifetime information provided in a datasheet for different types of emergency drivers 1.

The electronic device according to an embodiment extends the known approach of estimating and providing the estimated lifetime as a type-specific lifetime of the electronic device by a real-time process of calculating a predicted remaining lifetime for each individual electronic device installed in the field, based on a determined measure for the actual stress the electronic device is exposed to in the actual application environment.

An example of the real-time process includes method steps S1 to S6 of the flowchart shown in fig. 1. An electronic control circuit 3, e.g., a microcontroller forming part of electronic circuitry of the electronic device may perform steps S1 to S6.

In step S1, the electronic control circuit 3 controls operation of the electronic device in a current, selected operational mode.

The current selected operational mode is one of the different operational modes of the electronic device. Regarding the emergency driver 1 as a particular example, different operational modes include the first operational mode with the charger circuit 4 providing a charging current, the first operational mode without the charger circuit 4 providing a charging current, and the second operational mode.

The second operational mode may actually include a plurality of different second operational modes, each of the plural second operational modes being characterized a current value for the load current $I_{LED}$ output by the electronic device.

In step S2, the electronic control circuit 3 determines whether a change to different operational mode from the current selected operational mode is requested. In case, the electronic device determines in step S1 that the electronic device continues operating in the current selected operational mode, the process returns to step S1.

In case, the electronic device determines in step S1 that the electronic device terminates operating in the current selected operational mode, the process proceeds to step S3.

For example, the electronic device including the emergency driver 1, a sensor monitoring mains supply 12 may indicate an AC mains supply failure to the electronic control circuit 3. The electronic control circuit 3 may control switching of the electronic device into the second operational mode from the first operational mode for continuing operation of the electronic device from energy stored in the energy storage device 11.

In step S3, the electronic control circuit 3 determines at least one parameter of the selected operational modes.

For example, the electronic control circuit 3 may determine as the parameter of the selected operational mode a time of switching the electronic device from the current selected operational mode to the new selected operational mode.

In step S4 following to step S3, the electronic control circuit 3 calculates a predicted remaining lifetime based on the determined at least one parameter. In particular, the electronic control circuit 3 calculates the predicted remaining lifetime of the electronic device based on the determined at least one parameter, based on a currently stored value of the predicted remaining lifetime and a predetermined algorithm for calculating the predicted remaining lifetime.

The electronic control circuit 3 may access a memory 3.1 of the electronic control device for acquiring the stored value of the predicted remaining lifetime and a predetermined algorithm for calculating the predicted remaining lifetime, calculate the predicted remaining lifetime based on the determined at least one parameter using the predetermined algorithm, and the currently stored currently stored value of the predicted remaining lifetime. The electronic control circuit 3 then records the calculated predicted remaining lifetime in as a new value of the predicted remaining lifetime, or as an updated value of the predicted remaining lifetime in the memory. The method then proceeds from step S4 to step S5.

For example, in step S4, the electronic control circuit 3 may use the determined time of switching the electronic device from the current selected operational mode to the new selected operational mode to compute a time difference between a recorded time at which the electronic device switched into the current selected operational mode and the determined time of switching the electronic device from the current selected operational mode to the new selected operational mode. Thereby, the electronic device may determine the time duration for which the electronic device operates in the current selected operational mode until switching to the new selected operational mode.

The electronic control circuit 3 then updates in step S4 the predicted remaining lifetime of the electronic device using the actual time duration the electronic device operated in the current selected operational mode.

In the example, in step S4, the electronic device may store the time of switching the electronic device to operating in the new selected operational mode in the memory.

In step S5, the electronic control circuit 3 outputs the calculated predicted remaining lifetime, and then proceeds to step s6.

In step S6, the electronic control circuit 3 switches the electronic device into operating in the new selected operational mode, and returns to step S1 to control operating the electronic device in the new selected operational mode as the current selected operational mode. It is noted that apart from operating in a different currently selected mode, the memory 3.1 of the electronic device holds an updated value for the predicted remaining lifetime of the electronic device.

It is noted that the electronic control circuit 3 performing the steps S1, S2 and S6 will be present in the depicted or an equivalent form in most electronic control circuits 3 of electronic devices configured to operate in different operational modes. Steps S3, S4 and S4 being performed in real-time extend the capability of the electronic control circuit 3 significantly, and, as illustrated by the discussed example of determining the time of switching between operational modes enhance the remaining lifetime calculation by adding a software or firmware component without adding significant hardware and cost.

Fig. 1 show the process of steps S3, S4 and S5 inserted between step S2 of determining if to switch between operational modes, and step S6 of switching to a new operational mode in case the result of S2 is YES.

Alternatively, the process sequence of steps S3, S4 and S5 may be performed at least partially in parallel to the switching between the operational modes in step S2.

Alternatively, the process sequence of steps S3, S4 and S5 may be performed after step S6.

Initial values for the predicted remaining lifetime may be determined based on the estimated, type-specific lifetime estimated during the product design process for example and stored in the memory 3.1 of the electronic device.

An initial value for the starting time of operating the electronic device in the selected operational mode may be determined and stored in the memory 3.1 of the electronic device as part of a factory acceptance test or a commissioning process in the corresponding phase of the product life of the electronic device.

The at least one parameter of the operational modes may include time parameters, e.g. switching times for switching between modes, time durations of operating in operational modes.

The at least one parameter of the operational modes may further include temperature parameters, e.g. a measured temperature of the electronic control circuit 3. Some instances of electronic control circuits 3, e.g. some microcontroller comprise a temperature sensor monitoring the circuit temperature. Thus, it is possible to design the predetermined algorithm for the electronic device with a functionality to estimate a temperature stress of a critical circuit component, e.g., an electrolytic capacitor of the electronic circuitry of the electronic device based on the measured temperature of the electronic control circuit 3. The algorithm may then calculate the predicted remaining lifetime taking account of the estimated temperature stress.

Additionally or alternatively, the electronic control circuit 3 may acquire temperature values from sensors of the electronic device externally to the electronic control circuit 3, e.g. positioned on a printed circuit board of electric circuitry of the electronic device. The temperature values provided from temperature sensors exposed to a similar temperature as the critical circuit component with regard to lifetime enhances precision of the calculation of the predicted remaining lifetime significantly.

Fig. 2 provides a schematic circuit diagram of an emergency driver 1 as an example for an electronic device according to an embodiment.

The emergency driver 1 comprises an electronic circuit 2 (electronic circuitry 2) arranged on at least one electric circuit board (printed circuit board - PCB) arranged in a housing assembly.

The electronic circuit 2 comprise a plurality of circuit components. With regard to a lifetime of the electronic circuit, capacitors, and in particular electrolytic capacitors are to be named, which are not explicitly displayed in fig.2.

A further circuit component of the electronic circuit 2 is the electronic control circuit 3. The electronic control circuit 3 may comprise at least one integrated circuit (IC), for example at least one microcontroller, ASIC or FPGA. The electronic control circuit 3 may comprise at least one of logic circuits implemented in hardware and processing circuits together with associated with memory circuits for storing data (memory 3.1). The memory 3.1 may comprise volatile and non-volatile memory.

The memory 3.1 may store program data or firmware. Additionally, the memory 3.1 may store data generated during execution of one or more programs.

The control circuit 3 controls operation of the emergency driver 1, and in particular controls operation of the emergency driver 1 in different operational modes and switching of the emergency driver 1 from one operational mode to another operational mode. The electronic control circuit 3 further controls selecting a current operational mode, in which the emergency driver 1 operates, and selecting a new operational mode, e.g. selecting a new operational mode based on an event that occurred.

The events based on whose occurrence the electronic control device determines to switch from a current selected mode to new selected mode may include a mains supply failure, a charging level of an energy storage device 11 (secondary battery 11) falling below a minimum charging level, and the charging level of an energy storage device 11 (secondary battery 11) exceeding a maximum charging level threshold.

The electronic circuit 2 comprises different functional circuit elements. The functional circuit elements include a converter circuit 5 for generating and outputting a load current $I_{LED}$ to at least on lighting module 10 with an emergency lighting capability. The converter circuit 5 may generate the load current $I_{LED}$ either based in a first operational mode based on electric energy drawn via a power supply interface L, N, PE from mains supply 12 of a building infrastructure. Alternatively, the converter circuit 5 generates the load current $I_{LED}$ based in a second operational mode, e.g. the emergency mode, based on electric energy drawn via a battery interface BATT from the energy storage device 11.

The functional circuit elements of the electric circuit 2 include a charger circuit 4 for generating and outputting a charge current $I_{CHARGE}$ via the battery interface BATT to the energy storage device 11. Thus, in the first operational mode, the emergency driver 1 may operate either with the charger circuit 4 generating and providing the charging current $I_{CHARGE}$ for (re-) charging the energy storage device 11 in case the charging level is smaller than the predetermined minimum charging level (charger-ON state), or the charger circuit 4 generating and providing the charging current $I_{CHARGE}$ for (re-) charging the energy storage device 11 in case the charging level is exceeds the predetermined minimum charging level (charger-OFF state).

The emergency driver 1 may further comprise at least one communication interface 6 (data interface 6) for communicating with other devices of an emergency lighting system, escape route guidance system, or building infrastructure system.

Other devices linked at least temporarily via the data interface 6 include a central control device 13 (server 13) for controlling a plurality of emergency drivers 1 situated all over a building.

The central control device 13 may include a device management capability that monitors the operational states of connected devices including the emergency devices 1, and schedules maintenance tasks including replacement of connected devices that exceed their predicted lifetime in order to maintain a high availability of the entire system.

The data interface 6 may include at least of a wired data interface or a wireless interface that enables communication via a network N according to one or plural communication standards including DALI$^{RTM}$.

The electronic circuit 2 may include a temperature sensor for sensing a temperature of the electronic device. The sensed temperature may be an ambient temperature in the housing assembly close to the PCB of the electronic circuit 2.

The electronic control circuit 3 may include a further temperature sensor for sensing a temperature $T_{CPU}$ of the electronic control circuit 3. An internal temperature sensor often forms an integrated part of present integrated circuits and may be used to an advantage in combination with present disclosure.

A further structural element not explicitly shown in fig. 2 is a display element of the emergency driver 1. The display may output a display signal to a human observer based on an output of the electronic control circuit, which conveys the information including the predicted remaining lifetime of the electronic device.

Fig. 3 is a simplified flowchart of a current method for calculating an estimated lifetime of the electronic device according to prior art and used for implementing the electronic device according to an embodiment.

The process including steps S10 to S17 of fig. 3 may be useful for providing the estimated lifetime of the electronic device for basic application scenarios useful for the application engineer and documented in application sheets of the electronic device.

The process of steps S10 to S17 of fig. 3 may further provide initial values for the predicted remaining lifetime of the electronic lifetime for embodiments of the method of fig. 1 and stored in a memory 3.1 of the electronic device.

In step S10, the process measures a capacitor temperature at each capacitor for each operational mode.

In step S11, the process measures a ripple current through each capacitor for each operational mode.

In step S12, the process measures a device temperature at each capacitor in each operational mode.

In step S13, the process estimates a charger-ON time in the first operational mode.

In step S14, the process estimates a charger-OFF time in the first operational mode.

In step S15, the process estimates a time in the second operational mode.

In step S16, the process performs a calculation of the estimated lifetime for the design of the electronic device based on the measured values from steps S10, S11, and S12, and the estimated values determined in steps S13, S14, and S15.

In step S17, the process records the calculated estimated lifetime of the electronic device in to a database. The recorded lifetime bases essentially on values measured during the design phase of the electronic device under laboratory or simulated environmental conditions, and on estimated values. The estimated values effectively base on assumptions concerning a future application phase of the electronic device in the field.

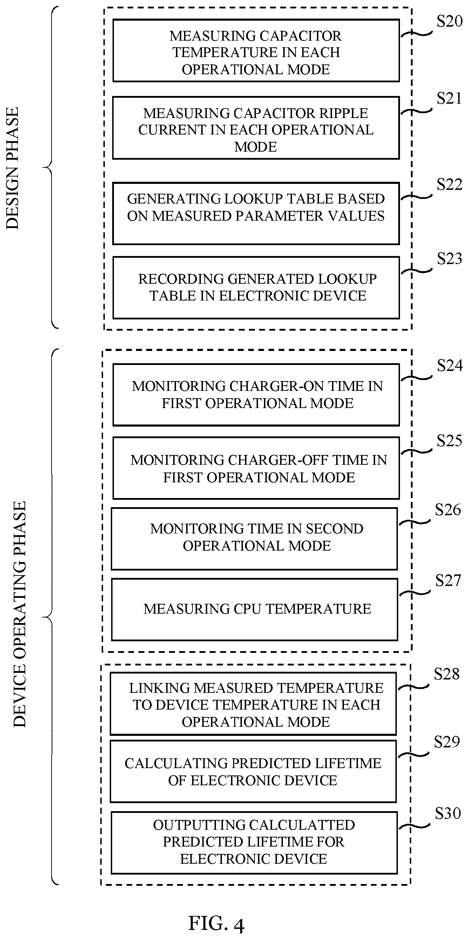

Fig. 4 is a simplified flowchart illustrating a method for calculating a predicted lifetime of the electronic device. The method illustrates an example of computing a predicted lifetime information of an electronic device. The electronic device comprises electronic circuitry including at least one electronic control circuit 3 and may have a general structure as discussed with respect to fig. 2.

An implementation of the method shows an approach that may base on software running on available and already embedded hardware in the electronic device. The method uses an algorithm for predicting the remaining lifetime of the electronic device that is initiated in a design phase of the electronic device. During the design phase, which comprises steps S20 to S23 of fig. 4, the method generates a lookup table that is stored in the memory 3.1 of the electronic device.

The generating the lookup table in the design phase may correspond generally to the process of fig.3, and provides a type-specific table for storing in the memory 3.1 of each particular instance of the electronic device, which corresponds at least with respect to the components that determine the operational lifetime of the electronic device. Components that heavily influence an expected operational lifetime of electronic circuitry are typically capacitors, in particular electrolytic capacitors. Electrolytic capacitors are the circuits components with the shortest lifespan in electric circuits and in most cases determine the lifetime of electric circuits such as power supplies and electric driver circuits. One mechanism that causes degradation and finally failure of electrolytic capacitors originates in a gradual evaporation of the electrolyte over time. This mechanism results in lower capacitance and higher effective series resistance. Evaporation of the electrolyte increases with increasing temperatures. For example, an expected lifetime of an aluminum electrolytic capacitor is determined by the amount of excess electrolyte, a speed of the electrolyte evaporating, e.g. through a rubber sealing, and the temperature that determines the speed of evaporation. Predicting an expected lifetime L of tan electrolytic capacitor may follow, for example Arrhenius' equation

$$L = L_0 \times \frac{2^{(T_{MAX} - T_C)}}{10};$$

with $L_0$ representing the expected lifetime under a maximum rated operating temperature, $T_{MAX}$ representing the allowable maximum rated operating temperature, and $T_C$ the actual temperature of the capacitor in operation.

Besides the temperature of the electrolytic capacitor, degradation of the electrolytic capacitor causes increased ripple currents, e.g. leakage currents due to an increase in tan $\delta$ through the electrolytic capacitor.

Ripple currents typically have a periodic non-sinusoidal waveform derived from an AC power source and show characteristically high current amplitude for narrow bandwidth pulses. An aluminum electrolytic capacitor has a larger loss tangent tan $\delta$ than other types of capacitors. Thus, the electrolytic capacitor produces more internal heat in case the ripple current flows through the electrolytic capacitor. High ripple currents through the capacitor increase temperature of the electrolytic capacitor. A temperature rise due to the generated heat may significantly affect the lifetime of the capacitor. Manufacturers therefore specify ripple current ratings for capacitors, in particular to take into account the generated heat as it passes through an equivalent series resistance that is associated with any capacitor. If the generated heat effect exceeds the capacitor's ability to dissipate heat, the temperature $T_C$ rises, which hence adversely affects reliability and affects the component lifetime according to the Arrhenius' equation, which essentially stipulates that the lifetime of the electrolytic capacitor decrease by half for every 10°C increase in operating temperature $T_C$.

Thus, the parameters temperature $T_C$ (ambient temperature $T_C$) of capacitors of the electrolytic capacitors of the electronic circuits of the electronic device and electric ripple currents through the electrolytic capacitors of the electronic circuits.

In the design phase, the process evaluates an example of the electronic device, in particular the electronic circuit of the electronic device.

In step S20, a temperature $T_C$ of the capacitors of the electronic circuits of the electronic device in each operational mode under different predetermined operational conditions is measured.

In step S21, a ripple current through the capacitors of the electronic circuits of the electronic device in each operational mode under different predetermined operational conditions is measured.

Steps S20 and S21 may be performed in parallel or in series.

In step S22, the measured values are used to generate a table that comprises the measured values for the parameters, in particular in the example of fig. 4, the measured values for the ripple current and the measured values for the temperature $T_C$ in association with the operational mode and a calculated predicted lifetime of the electronic device.

In step S23, the generated table is stored in the memory 3.1 of each electronic device of the corresponding type of the electronic device, which was the device-under-test in steps S20 and S21.

The steps S21 to S22 may be performed for predetermined number of electronic device of a same type in order to take statistic variations in characteristics of the electronic device into account.

The method uses the table stored in the memory 3.1 in the operating phase of each individual device. The operating phase includes steps S24 to S30 of fig. 4.

In step S24, the electronic control circuit 3 monitors the charger-OFF time. In particular, the electronic control circuit 3 determines the time during which the electronic device operates in the first operational mode and the charger circuit 4 of the electronic device is in the OFF-state.

In step S25, the electronic control circuit 3 monitors the charger-ON time. In particular, the electronic control circuit 3 determines the time during which the electronic device operates in the first operational mode and the charger circuit 4 of the electronic device is in the ON-state.

In step S26, the electronic control circuit 3 monitors the time the electronic device is operating in the second operational mode. In particular, the electronic control circuit 3 determines the time during which the electronic device operates in the second operational mode.

The electronic control circuit 3 may perform steps S24, S25 and S26 are performed in real-time, continuously or at predetermined time intervals.

The method may perform steps S24, S25 and S26 each time, the electronic control circuit 3 determines that a predetermined event, e.g. a switching event between operational modes, or a switch of the charger circuit 4 between charger-ON state and charger-OFF state occurs.

In step S27, the electronic control circuit 3 obtains a measurement value for the current temperature (circuit temperature). The circuit temperature may include a temperature of the electronic control circuit 3, e.g. a CPU temperature acquired by a temperature monitoring function included in a integrated circuit implementing the electronic control circuit 3. Additionally or alternatively, the circuit temperature includes a circuit temperature of the electronic circuit provided by a temperature sensor arranged in the electronic device.

In step s28, the electronic control circuit 3 associates the measured temperature value with the capacitor temperature $T_C$ in each operational mode using the stored table.

In step S29, the method proceeds with calculating the predicted lifetime of the electronic device based on the determined time durations for which the electronic device operated in the first operational mode with charger circuit 4 in the OFF-state, the first operational mode with charger circuit 4 in the ON-state, and the second operational mode, and the determined TC temperature values that have been determined in step S28 from the measured temperature value.

The calculated predicted lifetime in S29 is specific to the electronic device, and bases on the actually accumulated times the specific electronic device operated in the different operational modes. The calculated operational lifetime of the method of fig. 4, furthermore relies on temperatures $T_C$ of the electrolytic capacitors that the method determines in step S28 based on actually measured values for the circuit temperature during operation in the different operational modes. Thus, step S29 provides the calculated predicted lifetime as a real-time result, considerably more accurate than the value for the estimated lifetime representing a predetermined design lifetime according to fig. 3.

In step S30, the control circuit outputs the calculated predicted remaining lifetime as a real-time predicted lifetime of the specific electronic device. The control circuit may output the calculated predicted lifetime via a data interface, e.g. a DALI$^{RTM}$ interface available in many electronic devices of lighting systems, to a central server 13. The control circuit may output the calculated predicted lifetime via a display means in a perceivable signal to a user, e.g. in form of a warning signal that informs a user in case the calculated predicted lifetime is smaller than a predetermined threshold.

The perceivable signal may include information that corresponds to the calculated predicted lifetime, e.g. in form of a decreasing counter value that decreases with the decreasing predicted remaining lifetime.

The predicted remaining lifetime calculated for each individual electronic device in the field and based on the amount of stress the individual electronic device had been exposed to enable to base targeted decisions for preventive maintenance on the predicted remaining lifetime, e.g. a management server 13 may determine whether to preventively replace a particular electronic device due to the actual amount of stress it was exposed to in the field.

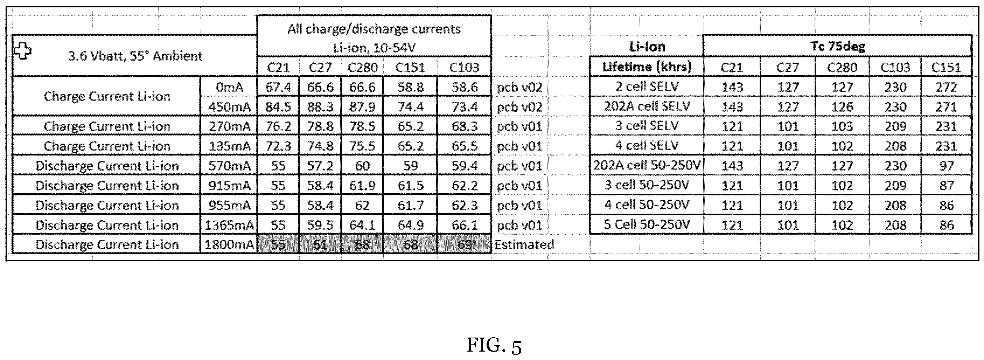

Fig. 5 shows tables illustrating an example for influential parameters for the process of lifetime calculation for the electronic device.

The left table shows for different variants of printed circuit boards "pcbv01", "pcbvo2" of an emergency driver 1 as a specific example of the electronic device for different charging currents and discharging currents of an Li-Ion secondary battery as an example for energy storage device, the respectively measured resulting capacitor temperatures $T_C$ at the electrolytic capacitors C21, C27, C280, C151, and C103 of the emergency driver 1.

The right table depicts the respective lifetime in 1000 hours ("khrs") of each electrolytic capacitors C21, C27, C280, C151, and C103.

Fig. 6 illustrates an example from the design phase of the lifetime design of an electronic device, in fig. 6 an emergency driver 1.

The design of the emergency driver 1 regards operation in the operational modes including "charger-ON", "charger-OFF", and "emergency mode". The required lifetime of the emergency driver 1 is distributed onto an alleged time of operation in each or the three operational modes during the design phase. For each operational mode, the respective fraction of the required overall lifetime may then be determined based on the alleged distribution of operation between the different operational modes. This illustrates the particular benefits of the claimed method, which predicts the remaining lifetime during operation not based on an alleged ratio of times in the operational modes, but an actually measured ratio of the of times in the respective operational modes, which is continuously updated.

Fig. 7 shows a table illustrating examples for the expected lifetime for examples of emergency drivers 1 for different ambient temperatures. The table includes the expected lifetime values for emergency driver type 1, type 2, type 3 and type 4 respectively when used in combination of energy storage devices in LiFePO$_4$ for ambient temperatures $t_c$ of 65°C, 70°C, 75°C, and 80°C. The shown values of the expected lifetime show a significant decrease in expected lifetime for an increase in ambient temperature for the electronic device.

In combination with the temperature variation between the different operational modes and the states whether the charger circuit 4 of the emergency driver 1 is charging the secondary battery or not, the effect of the actual fraction of the accumulated times the emergency driver 1 operates each the different operational modes is evident from fig. 6. Thus, the method for predicting the remaining lifetime of the electronic device provides a significant increase in accuracy required for effectively scheduling predicted maintenance due to providing an update to the datasheet values for the expected lifetime of the electronic device by performing real-time monitoring of the predicted remaining lifetime.

All steps which are performed by the various entities described in the disclosure as well as the functionalities described to be performed by the various entities are intended to mean that the respective structural entity, e.g. the electronic control circuit 3, is adapted to or configured to perform the respective steps and functionalities. In the following claims as well as in the description the word "comprising" does not exclude the presence of other structural elements or process steps.

The indefinite article "a" or "an" does not exclude a plurality. A single element or other unit may fulfill the functions of several entities or items recited in the claims. The mere fact that different dependent claims recite certain measures and features of the electronic control circuit 3 does not exclude that a combination of these measures and features cannot combined in an advantageous implementation.

**Claims**

1. An electronic device comprising electronic circuitry (2) including at least one electronic control circuit (3), wherein

   the electronic control circuit (3) is configured to obtain information in which operational mode of at least two operational modes the electronic device is currently operating in, and to generate time information on a duration of the electronic device operating in each of the at least two operational modes, and to store the generated time information in a memory (3.1),
   wherein at least one parameter value of a parameter of the electronic device differs in a first operational mode from a parameter value of the parameter during operation in at least one second mode of the at least two operational modes, and
   the electronic control circuit (3) is further configured
   to calculate a predicted lifetime information of the electronic device based on the time information stored in the memory, and further based on stored data on the at least two operational modes, and
   to output the calculated predicted lifetime information to at least one of a data interface (6) of the electronic device or a display of the electronic device, and the electronic device is
   **characterized in that**
   the at least one parameter of the electronic device includes a measured device temperature, a measured temperature of the electronic control circuit (3) and an ambient temperature of the electronic device, and
   the electronic control circuit (3) is configured to estimate the ambient temperature of the electronic device based on a predetermined relationship between a measured internal temperature of the electronic control circuit (3) and the measured device temperature of the electronic device.

2. The electronic device according to claim 1, wherein the at least one parameter of the electronic device further includes at least one electric current in the electronic device.

3. The electronic device according to at least one of the preceding claims, wherein
   the electronic control circuit (3) is configured to calculate the predicted lifetime information online, in particular at regular intervals, during operation of the electronic device.

4. The electronic device according to at least one of the preceding claims, wherein
   the electronic control circuit (3) is configured to calculate and store a remaining lifetime as the predicted lifetime information.

5. The electronic device according to at least one of the preceding claims, wherein
   the electronic control circuit (3) includes at least one of an integrated circuit, an application specific integrated circuit ASIC, a field programmable gate array FPGA, and a microcontroller.

6. The electronic device according to at least one of the preceding claims, wherein
   the electronic control circuit (3) is configured to control switching between the first operational mode and the at least one second operational mode of the electronic device.

7. The electronic device according to at least one of the preceding claims, wherein
   the at least two operational modes include at least one first mode during which a charging circuit (4) charges an electric storage device (11) or maintains the electric storage device (11) at a predetermined charge level, and at least one second mode during which the electronic device operates from electric energy drawn from the electric storage device (11).

8. The electronic device according to at least one of the preceding claims, wherein
   the electronic device includes at least one converter circuit (5), and in particular is an emergency driver device (1).

9. The electronic device according to at least one of the preceding claims, wherein
the memory (3.1) is internal part of the electronic device.

10. A method for computing a predicted lifetime information of an electronic device, the electronic device comprising electronic circuitry (2) including at least one electronic control circuit (3), the method including

   obtaining, by the electronic control circuit (3), information on which operational mode of at least two operational modes the electronic device is currently operating in,
   wherein at least one parameter value of a parameter of the electronic device differs in a first operational mode from a parameter value of the parameter during operation in at least one second mode of the at least two operational modes, generating (S3), by the electronic control circuit (3), time information on a duration of the electronic device operating in each of the at least two operational modes, and to store the generated time information in a memory (3.1),
   calculating (S4), by the electronic control circuit (3), the predicted lifetime information of the electronic device based on the time information stored in the memory (3.1) and further based on stored data on the at least two operational modes, and
   outputting, by the electronic control circuit (3), the calculated predicted lifetime information to at least one of a data interface (6) of the electronic device or a display of the electronic device, and **characterized in that**
   the at least one parameter of the electronic device includes a measured device temperature, a measured temperature of the electronic control circuit (3) and an ambient temperature of the electronic device, and
   estimating, by the electronic control circuit (3) the ambient temperature of the electronic device based on a predetermined relationship between a measured internal temperature of the electronic control circuit (3) and the measured device temperature of the electronic device.

11. A computer program comprising instructions, which, when a computer or digital signal processor executes the program, cause the computer or digital signal processor to carry out the method according to claim 11 for computing a predicted lifetime information of an electronic device.

**Patentansprüche**

1. **Elektronisches Gerät,** umfassend eine elektronische Schaltung (2) mit mindestens einer elektronischen Steuerschaltung (3),

   *wobei* die elektronische Steuerschaltung (3) dazu konfiguriert ist, Informationen darüber zu erhalten, in welchem Betriebsmodus von mindestens zwei Betriebsmodi das elektronische Gerät aktuell betrieben wird, und Zeitinformationen über die Dauer des Betriebs des elektronischen Geräts in jedem der mindestens zwei Betriebsmodi zu erzeugen und die erzeugten Zeitinformationen in einem Speicher (3.1) zu speichern, *wobei* sich mindestens ein Parameterwert eines Parameters des elektronischen Geräts in einem ersten Betriebsmodus von einem Parameterwert des Parameters während des Betriebs in mindestens einem zweiten Modus der mindestens zwei Betriebsmodi unterscheidet, und *wobei* die elektronische Steuerschaltung (3) ferner dazu konfiguriert ist, basierend auf den im Speicher gespeicherten Zeitinformationen und ferner basierend auf gespeicherten Daten zu den mindestens zwei Betriebsmodi eine vorhergesagte Lebensdauerinformation des elektronischen Geräts zu berechnen und die berechnete vorhergesagte Lebensdauerinformation an mindestens eine Datenschnittstelle (6) des elektronischen Geräts oder an eine Anzeige des elektronischen Geräts auszugeben, **dadurch gekennzeichnet, dass** der mindestens eine Parameter des elektronischen Geräts eine gemessene Gerätetemperatur, eine gemessene Temperatur der elektronischen Steuerschaltung (3) und eine Umgebungstemperatur des elektronischen Geräts **umfasst, und dass** die elektronische Steuerschaltung (3) dazu konfiguriert ist, die Umgebungstemperatur des elektronischen Geräts **basierend auf einer vorbestimmten Beziehung zwischen einer gemessenen internen Temperatur der elektronischen Steuerschaltung (3) und der gemessenen Gerätetemperatur** des elektronischen Geräts abzuschätzen.

2. **Elektronisches Gerät** nach Anspruch 1, *wobei* der mindestens eine Parameter des elektronischen Geräts **ferner mindestens einen elektrischen Strom** im elektronischen Gerät **umfasst.**

3. **Elektronisches Gerät** nach mindestens einem der vorhergehenden Ansprüche, *wobei* die elektronische Steuerschaltung (3) dazu konfiguriert ist, die **vorhergesagte Lebensdauerinformation online,** insbesondere in **regelmäßigen Abständen, während des Betriebs des elektronischen Geräts** zu berechnen.

4. **Elektronisches Gerät** nach mindestens einem der vorhergehenden Ansprüche, *wobei* die elektronische Steuerschaltung (3) dazu konfiguriert ist, eine **verbleibende** (Rest-)**Lebensdauer** als die vorhergesagte Lebensdauerinformation **zu berechnen und zu speichern.**

5. **Elektronisches Gerät** nach mindestens einem der vorhergehenden Ansprüche, *wobei* die elektronische Steuerschaltung (3) **mindestens ein Bauelement aus der Gruppe, bestehend aus** einer **integrierten Schaltung,** einer **anwendungsspezifischen integrierten Schaltung (ASIC),** einem **feldprogrammierbaren Gate-Array (FPGA)** und einem **Mikrocontroller umfasst.**

6. **Elektronisches Gerät** nach mindestens einem der vorhergehenden Ansprüche, *wobei* die elektronische Steuerschaltung (3) dazu konfiguriert ist, **das Umschalten zwischen dem ersten Betriebsmodus und dem mindestens einen zweiten Betriebsmodus** des elektronischen Geräts **zu steuern.**

7. **Elektronisches Gerät** nach mindestens einem der vorhergehenden Ansprüche, *wobei* die mindestens zwei Betriebsmodi **mindestens einen ersten Modus** umfassen, währenddessen eine **Ladeschaltung (4)** eine **elektrische Speichervorrichtung (11) lädt** oder die elektrische Speichervorrichtung (11) auf einem **vorbestimmten Ladezustand hält,** und **mindestens einen zweiten Modus,** währenddessen das elektronische Gerät **von elektrischer Energie aus der elektrischen Speichervorrichtung (11)** betrieben wird.

8. **Elektronisches Gerät** nach mindestens einem der vorhergehenden Ansprüche, *wobei* das elektronische Gerät **mindestens eine Wandlerschaltung (5)** umfasst und **insbesondere ein Notlichtbetriebsgerät (1)** ist.

9. **Elektronisches Gerät** nach mindestens einem der vorhergehenden Ansprüche, *wobei* der **Speicher (3.1) ein interner Bestandteil** des elektronischen Geräts ist.

10. **Verfahren zum Berechnen einer vorhergesagten Lebensdauerinformation** eines elektronischen Geräts, **wobei** das elektronische Gerät eine elektronische Schaltung (2) mit mindestens einer elektronischen Steuerschaltung (3) **umfasst, wobei** das Verfahren Folgendes **umfasst:**

- das **Erfassen,** durch die elektronische Steuerschaltung (3), von **Informationen darüber, in** welchem **Betriebsmodus** von mindestens zwei Betriebsmodi das elektronische Gerät **aktuell betrieben wird,**
- *wobei* sich **mindestens ein Parameterwert eines Parameters** des elektronischen Geräts **in einem ersten Betriebsmodus von** einem **Parameterwert** des Parameters **während des Betriebs in mindestens einem zweiten Modus** der mindestens zwei Betriebsmodi **unterscheidet,**
- das **Erzeugen (S3),** durch die elektronische Steuerschaltung (3), von **Zeitinformationen über die Dauer des Betriebs** des elektronischen Geräts **in** jedem der mindestens zwei **Betriebsmodi, und das Speichern der erzeugten Zeitinformationen in einem Speicher (3.1),**
- das **Berechnen (S4),** durch die elektronische Steuerschaltung (3), der **vorhergesagten Lebensdauerinformation** des elektronischen Geräts **basierend auf den** im Speicher (3.1) **gespeicherten Zeitinformationen** und **ferner basierend auf** gespeicherten **Daten zu** den **mindestens zwei Betriebsmodi,**
- das **Ausgeben,** durch die elektronische Steuerschaltung (3), der **berechneten vorhergesagten Lebensdauerinformation an mindestens eine Datenschnittstelle (6)** des elektronischen Geräts **oder eine Anzeige** des elektronischen Geräts,

**wobei** das Verfahren **dadurch gekennzeichnet ist, dass** der mindestens eine Parameter des elektronischen Geräts **eine gemessene Gerätetemperatur, eine gemessene Temperatur** der elektronischen Steuerschaltung (3) **und eine Umgebungstemperatur** des elektronischen Geräts **umfasst, und dass** die elektronische Steuerschaltung (3) dazu konfiguriert ist, **die Umgebungstemperatur** des elektronischen Geräts **auf Grundlage einer vorbestimmten Beziehung zwischen einer gemessenen internen Temperatur** der elektronischen Steuerschaltung (3) **und der gemessenen Gerätetemperatur** des elektronischen Geräts **abzuschätzen.**

11. **Computerprogramm,** umfassend Anweisungen, die, **wenn** ein Computer oder ein digitaler Signalprozessor das Programm ausführt, den Computer oder den digitalen Signalprozessor **dazu veranlassen, das Verfahren nach Anspruch 11 zum Berechnen einer vorhergesagten Lebensdauerinformation eines elektronischen Geräts auszuführen.**

**Revendications**

1. **Dispositif électronique** comprenant un circuit électronique (2) comportant au moins un circuit de commande électronique (3),

le circuit de commande électronique (3) étant configuré pour obtenir des **informations sur le mode de fonctionnement** (parmi au moins deux modes de fonctionnement) **dans lequel le dispositif électronique fonctionne actuellement,** et pour générer des **informations temporelles relatives à la durée de fonctionnement du dispositif électronique dans chacun desdits au moins deux modes de fonctionnement,** et pour stocker les informations temporelles générées dans une mémoire (3.1),

une valeur d'au moins un paramètre du dispositif électronique **étant différente dans un premier mode de fonctionnement par rapport à une valeur de ce paramètre pendant le fonctionnement dans au moins un deuxième mode de fonctionnement** parmi lesdits au moins deux modes de fonctionnement,

**et le circuit de commande électronique (3) étant en outre configuré** pour calculer une **information de durée de vie prédite** du dispositif électronique sur la base des informations temporelles stockées dans la mémoire (3.1) ainsi que sur la base de données stockées relatives auxdits au moins deux modes de fonctionnement, et pour délivrer l'information de durée de vie prédite calculée à **au moins une interface de données (6)** du dispositif électronique ou à un **dispositif d'affichage** du dispositif électronique,

**le dispositif électronique étant caractérisé en ce que ledit au moins un paramètre** du dispositif électronique **comprend une température du dispositif électronique mesurée, une température mesurée du circuit de commande électronique (3) et une température ambiante** du dispositif électronique, **et en ce que** le circuit de commande électronique (3) est configuré pour **estimer la température ambiante** du dispositif électronique sur la base d'une **relation prédéterminée entre une température interne mesurée** du circuit de commande électronique (3) **et la température mesurée** du dispositif électronique.

2. **Dispositif électronique** selon la revendication 1, **dans lequel ledit au moins un paramètre** du dispositif électronique **comprend en outre au moins un courant électrique** au sein du dispositif électronique.

3. **Dispositif électronique** selon au moins l'une des revendications précédentes, **dans lequel le circuit de commande électronique (3) est configuré**

pour calculer l'information de durée de vie prédite en ligne,** en particulier **à intervalles réguliers, pendant le fonctionnement** du dispositif électronique.

4. **Dispositif électronique** selon au moins l'une des revendications précédentes, **dans lequel le circuit de commande électronique (3) est configuré pour calculer et stocker une durée de vie restante** en tant qu'information de durée de vie prédite.

5. **Dispositif électronique** selon au moins l'une des revendications précédentes, **dans lequel le circuit de commande électronique (3) comprend au moins l'un des éléments suivants** : un **circuit intégré, un circuit intégré spécifique à une application (ASIC), un réseau de portes programmables sur site (FPGA)** et un **microcontrôleur.**

6. **Dispositif électronique** selon au moins l'une des revendications précédentes, **dans lequel le circuit de commande électronique (3) est configuré pour commander la commutation entre le premier mode de fonctionnement et ledit au moins un second mode de fonctionnement** du dispositif électronique.

7. **Dispositif électronique** selon au moins l'une des revendications précédentes, **dans lequel lesdits au moins deux modes de fonctionnement comprennent au moins un premier mode pendant lequel un circuit de charge (4) charge un dispositif de stockage électrique (11) ou maintient le dispositif de stockage électrique (11) à un niveau de charge prédéterminé, et au moins un second mode pendant lequel le dispositif électronique fonctionne à partir de l'énergie électrique fournie par le dispositif de stockage électrique (11).**

8. **Dispositif électronique** selon au moins l'une des revendications précédentes, **dans lequel le dispositif électronique comprend au moins un circuit de conversion (5), et est en particulier un dispositif d'alimentation d'urgence (1).**

9. **Dispositif électronique** selon au moins l'une des revendications précédentes, **dans lequel la mémoire (3.1) fait partie intégrante du dispositif électronique.**

10. **Procédé de calcul d'une information de durée de vie prédite d'un dispositif électronique,** le dispositif électronique comprenant un circuit électronique (2) comportant au moins un circuit de commande électronique (3), **ledit procédé comprenant les étapes consistant à** :

- **obtenir,** par le circuit de commande électronique (3), **des informations sur le mode de fonctionnement dans lequel le dispositif électronique fonctionne parmi au moins deux modes de fonctionnement,**

- **une valeur d'au moins un paramètre** du dispositif électronique **étant différente dans un premier mode de fonctionnement par rapport à une valeur de ce paramètre pendant le fonctionnement dans au moins un deuxième mode de fonctionnement** parmi lesdits au moins deux modes de fonctionnement,

- **générer (S3),** par le circuit de commande électronique (3), **des informations temporelles relatives à la durée de fonctionnement du dispositif électronique dans chacun desdits au moins deux modes de fonctionnement,** et stocker les informations temporelles générées dans une mémoire (3.1),

- **calculer (S4),** par le circuit de commande électronique (3), **l'information de durée de vie prédite** du dispositif électronique **sur la base** des informations temporelles **stockées dans la mémoire (3.1) et en outre sur la base de données stockées relatives auxdits au moins deux modes de fonctionnement,**

- **délivrer,** par le circuit de commande électronique (3), **l'information de durée de vie prédite calculée à au moins une interface de données (6)** du dispositif électronique ou à un **dispositif d'affichage** du dispositif électronique,

le procédé étant caractérisé en ce que ledit au moins un paramètre du dispositif électronique comprend une température du dispositif électronique mesurée, une température mesurée du circuit de commande électronique (3), et une température ambiante du dispositif électronique, et en ce que l'on estime, par le circuit de commande électronique (3), la température ambiante du dispositif électronique sur la base d'une relation prédéterminée entre une température interne mesurée du circuit de commande électronique (3) et la température mesurée du dispositif électronique.

11. **Programme d'ordinateur** comprenant des instructions qui, **lorsqu'un ordinateur ou un processeur de signaux numériques exécute le programme, amènent l'ordinateur ou le processeur de signaux numériques à exécuter le procédé selon la revendication 11 pour calculer une information de durée de vie prédite d'un dispositif électronique.**

FIG. 1

FIG. 2

FIG. 3

**DESIGN PHASE**

MEASURING CAPACITOR TEMPERATURE IN EACH OPERATIONAL MODE — S20

MEASURING CAPACITOR RIPPLE CURRENT IN EACH OPERATIONAL MODE — S21

GENERATING LOOKUP TABLE BASED ON MEASURED PARAMETER VALUES — S22

RECORDING GENERATED LOOKUP TABLE IN ELECTRONIC DEVICE — S23

**DEVICE OPERATING PHASE**

MONITORING CHARGER-ON TIME IN FIRST OPERATIONAL MODE — S24

MONITORING CHARGER-OFF TIME IN FIRST OPERATIONAL MODE — S25

MONITORING TIME IN SECOND OPERATIONAL MODE — S26

MEASURING CPU TEMPERATURE — S27

LINKING MEASURED TEMPERATURE TO DEVICE TEMPERATURE IN EACH OPERATIONAL MODE — S28

CALCULATING PREDICTED LIFETIME OF ELECTRONIC DEVICE — S29

OUTPUTTING CALCULATTED PREDICTED LIFETIME FOR ELECTRONIC DEVICE — S30

FIG. 4

| 3.6 Vbatt, 55° Ambient | | All charge/discharge currents Li-ion, 10-54V | | | | | | | Li-Ion | Tc 75deg | | | | |
|---|---|---|---|---|---|---|---|---|---|---|---|---|---|---|
| | | C21 | C27 | C280 | C151 | C103 | | | Lifetime (khrs) | C21 | C27 | C280 | C103 | C151 |
| Charge Current Li-ion | 0mA | 67.4 | 66.6 | 66.6 | 58.8 | 58.6 | pcb v02 | | 2 cell SELV | 143 | 127 | 127 | 230 | 272 |
| | 450mA | 84.5 | 88.3 | 87.9 | 74.4 | 73.4 | pcb v02 | | 202A cell SELV | 143 | 127 | 126 | 230 | 271 |
| Charge Current Li-ion | 270mA | 76.2 | 78.8 | 78.5 | 65.2 | 68.3 | pcb v01 | | 3 cell SELV | 121 | 101 | 103 | 209 | 231 |
| Charge Current Li-ion | 135mA | 72.3 | 74.8 | 75.5 | 65.2 | 65.5 | pcb v01 | | 4 cell SELV | 121 | 101 | 102 | 208 | 231 |
| Discharge Current Li-ion | 570mA | 55 | 57.2 | 60 | 59 | 59.4 | pcb v01 | | 202A cell 50-250V | 143 | 127 | 127 | 230 | 97 |
| Discharge Current Li-ion | 915mA | 55 | 58.4 | 61.9 | 61.5 | 62.2 | pcb v01 | | 3 cell 50-250V | 121 | 101 | 102 | 209 | 87 |
| Discharge Current Li-ion | 955mA | 55 | 58.4 | 62 | 61.7 | 62.3 | pcb v01 | | 4 cell 50-250V | 121 | 101 | 102 | 208 | 86 |
| Discharge Current Li-ion | 1365mA | 55 | 59.5 | 64.1 | 64.9 | 66.1 | pcb v01 | | 5 Cell 50-250V | 121 | 101 | 102 | 208 | 86 |
| Discharge Current Li-ion | 1800mA | 55 | 61 | 68 | 68 | 69 | Estimated | | | | | | | |

FIG. 5

| Temp. 1 | 87.9 | Case temperature or ambient temperature | charge on |
|---|---|---|---|
| Temp. 2 | 66.6 | Case temperature or ambient temperature | charge off |
| Temp. 3 | 62 | Case temperature or ambient temperature | emergency |
| | | | |
| I1-Ta1 | 159 | Actual ripple current I1 under Temp.1 | charge on |
| I1-Ta2 | 57 | Actual ripple current I1 under Temp.2 | charge off |
| I1-Ta3 | 0 | Actual ripple current I1 under Temp.3 | emergency |
| | | | |
| I2-Ta1 | 0 | Actual ripple current I2 under Temp.1 | charge on |
| I2-Ta2 | 0 | Actual ripple current I2 under Temp.2 | charge off |
| I2-Ta3 | 0 | Actual ripple current I2 under Temp.3 | emergency |
| | | | |
| Lta1 | 11520 | Required life time under condition 1 | charge on |
| Lta2 | 74520 | Required life time under condition 2 | charge off |
| Lta3 | 360 | Required life time under condition 3 | emergency |
| Sum Lta | 86400 | | |
| | | | |
| Lta1 (at 105°) | 2372.21053 | Consumed life time of condition 1 at rated temperature | |
| Lta2 (at 105°) | 3501.93677 | Consumed life time of condition 2 at rated temperature | |
| Lta3 (at 105°) | 12.2986199 | Consumed life time of condition 3 at rated temperature | |
| Sum Lta (at 105°C) | 5886.44592 | Totally consumed life times based on rated temperature | |
| | | | |
| L | 102744.5 | Expected life time under mix of entered conditions | |

FIG. 6

**Expected lifetime with LiFePO$_4$ batteries**

| EM LED CONVERTER TYPE 1 | tc | 65 °C | 70 °C | 75 °C | 80 °C |
|---|---|---|---|---|---|
| | lifetime | > 100,000 h | > 100,000 h | 82,000 h | 58,000 h |
| EM LED CONVERTER TYPE 2 | tc | 65 °C | 70 °C | 75 °C | 80 °C |
| | lifetime | > 100,000 h | > 100,000 h | 82,000 h | 58,000 h |
| EM LED CONVERTER TYPE 3 | tc | 65 °C | 70 °C | 75 °C | 80 °C |
| | lifetime | > 100,000 h | > 100,000 h | 82,000 h | 58,000 h |
| EM LED CONVERTER TYPE 4 | tc | 65 °C | 70 °C | 75 °C | 80 °C |
| | lifetime | > 100,000 h | > 100,000 h | 82,000 h | 58,000 h |

FIG. 7

**EP 4 425 289 B1**

## REFERENCES CITED IN THE DESCRIPTION

### Patent documents cited in the description

- US 2022185041 A1

- US 20030204777 A1

### Non-patent literature cited in the description

- DC link electrolytic capacitor lifetime analysis for a PV boost converter. **LENZ, JOAO et al.** 2017 IEEE international symposium on power electronics for distributed generation systems. IEEE, 17 April 2017, 1-6

- **SHUNFENG CHENG et al.** *Multivariate state estimation technique for remaining useful life prediction of electrolytic products*, 31 December 2007